Europäisches Patentamt

European Patent Office

Office européen des brevets

(11) Numéro de publication: **0 200 575**
**A1**

## (12) DEMANDE DE BREVET EUROPEEN

(21) Numéro de dépôt: **86400410.6**

(22) Date de dépôt: **26.02.86**

(51) Int. Cl.⁴: **G 01 C 15/06**

(30) Priorité: **21.03.85 FR 8504510**

(43) Date de publication de la demande:
**05.11.86 Bulletin 86/45**

(84) Etats contractants désignés:
**AT BE CH DE GB IT LI LU NL SE**

(71) Demandeur: **Société en commandite simple "CAF GRAINS & CIE"**
**64, rue Léon Beauchamps**
**F-59930 LA CHAPELLE D'ARMENTIERES(FR)**

(72) Inventeur: **Desreumaux, Patrick**
**6 rue Nationale**
**F-59930 La Chapelle d'Armentières(FR)**

(74) Mandataire: **Lepage, Jean-Pierre**
**Cabinet Lemoine & Associés 12, Boulevard de la Liberté**
**F-59800 Lille(FR)**

(54) **Piquet modulaire de jalonnage.**

(57) Le piquet modulaire de jalonnage (1) comprend une embase (2) effilée destinée à faciliter la pénétration du piquet dans le sol, un corps central (3) de section cruciforme et une extrémité supérieure (4) munie d'une cavité (5) axiale susceptible de recevoir la pointe (2) d'un piquet modulaire (1) superposé.

La cavité (5) de l'extrémité supérieure (4) du piquet modulaire (1) est dotée d'orifices (6) de communication avec l'extérieur. De préférence, ces orifices (6) sont disposés dans le fond de la cavité (5) coaxialement à l'axe (7) du piquet et ils sont répartis entre les branches du corps central de section cruciforme du piquet (1).

L'invention trouvera tout particulièrement son application dans le domaine agricole, horticole et des travaux publics.

./...

Fig:1

L'invention est relative à un piquet modulaire de jalonnage. Elle trouvera son application dans le domaine agricole, horticole ou des travaux publics, notamment pour baliser une surface, en particulier délimiter une zone, matérialiser une voie d'accès, servir de tuteur ou d'élément de signalisation (par pancarte).

L'utilisation de piquets modulaires de jalonnage est largement répandue dans le domaine agricole. En effet, avec l'introduction de nouvelles techniques et technologies avancées, l'agriculture demande une organisation très précise et nécessite une gestion renforcée de l'occupation des sols.

Ainsi, la délimitation des surfaces plantées avec la matérialisation des passages que peuvent emprunter les roues du tracteur sont réalisées par l'utilisation de piquets de jalonnage judicieusement mis en place.

L'agriculteur se sert ensuite des repères pour, par exemple, répandre de l'engrais ou pulvériser un produit de traitement sur les zones plantées.

Le coût sans cesse croissant des produits chimiques utilisés pour favoriser la culture oblige à connaître très précisément les emplacements qui doivent être traités en prenant garde de ne pas provoquer un recouvrement lors du traitement des zones voisines.

Par ailleurs, dans le domaine des travaux publics, la matérialisation du tracé des routes, la localisation de canalisations enfouies, demandent l'utilisation de piquets de jalonnage dont l'emploi s'est largement répandu.

Actuellement, les piquets de jalonnage prennent la forme d'une baguette dont l'une des extrémités est effilée de façon à faciliter la pénétration dans le sol et l'autre extrémité est munie de moyens d'accrochage d'une plaque de balisage.

Le rôle du piquet de jalonnage est non seulement de matérialiser un point mais également une direction. Pour cette raison, la plaque doit pouvoir être orientée selon une direction quelconque puis être immobilisée en rotation.

A cet égard, le corps du piquet de jalonnage doit présenter de préférence une section carrée ou tout au moins présenter des angles vifs pour que, une fois introduit dans le sol, il ne puisse y avoir rotation. De plus, la fixation de la plaque sur le piquet de jalonnage doit être assurée fermement afin d'éviter tout mouvement relatif.

Selon les usages, il est cependant nécessaire d'utiliser des piquets de jalonnnage plus ou moins hauts. En effet, par exemple en matière agricole, si l'on utilise des piquets courts, ceux-ci peuvent être couverts par le feuillage des plantations lorsque ces dernières se sont suffisamment développées, ce qui rend inopérant le balisage.

Pour pallier à cet inconvénient, il est tentant d'utiliser dès l'origine un piquet très haut. Malheureusement, celui-ci présente des gênes, en particulier il peut plus facilement être accroché lors du passage d'engins motorisés et par ailleurs, il offre une prise au vent supérieure, d'où le risque de voir le piquet s'abattre ou pivoter accidentellement.

Le piquet modulaire de jalonnage apporte une solution à ce problème en ce sens qu'il offre une possibilité d'emboitement pour adapter la longueur du piquet au besoin.

Le piquet modulaire est donc muni à une de ses extrémités d'un moyen d'accrochage susceptible de recevoir un élément qui se superpose. Toutefois, un certain nombre de propriétés caractéristiques des piquets de jalonnage doivent être conservées telles que l'immobilisation en rotation de l'ensemble des éléments modulaires et une certaine continuité de cet ensemble pour ne pas créer des points d'accrochage nuisibles au bon équilibre de l'ensemble.

Jusqu'à présent, aucune solution réellement satisfaisante n'a été apportée dans ce domaine. En particulier, les systèmes d'emboitement envisagés pour assurer la superposition de piquets modulaires ne sont pas satisfaisants en ce sens qu'ils se dégradent très rapidement, ce qui rend hors d'usage le piquet modulaire de jalonnage.

La principale source d'ennuis rencontrée dans les piquets modulaires est l'introduction de corps étrangers dans le dispositif d'accrochage situé à l'extrémité du piquet modulaire. Les corps étrangers peuvent être l'eau de ruissellement rencontrée avec les pluies, ou plus simplement des particules de terre qui ont pénétré accidentellement au sein du dispositif de fixation.

Le fonctionnement peut être à nouveau assuré après un nettoyage approprié, ce qui constitue néanmoins un lourd inconvénient, et parfois il peut y avoir mise hors d'usage définitive du piquet de jalonnage, par exemple si l'eau introduite dans les moyens d'accrochage vient à geler et à briser le piquet de façon analogue à la rupture des canalisations rencontrée par période de gel.

Le but principal de la présente invention est de présenter un piquet modulaire de jalonnage destiné à baliser une surface dans le domaine agricole, horticole ou des travaux publics notamment pour délimiter une zone ou matérialiser une voie d'accès, dont le dispositif d'accrochage qui permet de mettre bout à bout les piquets modulaires soit à l'épreuve des différents corps étrangers susceptibles de s'y introduire.

L'invention permet par conséquent de faciliter l'utilisation des piquets modulaires de jalonnage en évitant tout nettoyage préalable à leur utilisation et en les garantissant contre la rupture en cas de gel.

Par ailleurs, les caractéristiques de la présente invention permettent au piquet modulaire de présenter une parfaite continuité de sa ligne. Cette propriété permet d'améliorer très sensiblement la tenue du piquet au vent et aux accrochages accidentels susceptibles d'être rencontrés lors du passage d'engins motorisés.

Par ailleurs, toutes les garanties de précision dans la direction indiquée par la plaque, qui étaient jusqu'alors données par les piquets de jalonnage simples, sont intégralement maintenues avec le piquet modulaire de la présente invention qui, dans ce domaine, donne un accrochage au sol maximum et un verrouillage efficace de la plaque sur l'ensemble du jalon.

D'autres buts et avantages de la présente invention apparaitront au cours de la description qui va suivre qui n'est cependant donnée qu'à titre indicatif et qui n'a pas pour but de la limiter.

Le piquet modulaire de jalonnage, destiné à baliser une surface dans le domaine agricole, horticole ou des travaux publics, notamment pour délimiter une zone ou matérialiser une voie d'accès, qui comprend une embase effilée destinée à faciliter la pénétration dans le sol, un corps central et une extrémité supérieure munie d'une cavité axiale susceptible de recevoir la pointe d'un piquet modulaire superposé ou la pointe de la plaque, est caractérisé par le fait que la cavité de l'extrémité supérieure du piquet modulaire est dotée d'orifices de communication avec l'extérieur.

L'invention sera mieux comprise à la lecture de la description suivante accompagnée de dessins en annexe parmi lesquels :

- la figure 1 représente un mode préférentiel de réalisation du piquet modulaire de jalonnage en vue de face,

- la figure 2 représente une vue axiale du piquet modulaire de jalonnage,

- les figures 3 et 4 représentent deux types de plaques susceptibles d'être placées à l'extrémité du piquet modulaire de jalonnage de la présente invention.

La présente invention vise un piquet modulaire de jalonnage destiné à baliser une surface dans le domaine agricole, horticole où des travaux publics, notamment pour délimiter une zone ou matérialiser une voie d'accès.

On connait la nécessité d'utiliser des bornes sur terrains libres pour matérialiser le périmètre d'une surface. A cet effet, on utilise des piquets de jalonnage qui se plantent dans le sol et qui permettent de localiser un emplacement.

Les applications des piquets de jalonnage sont nombreuses et se retrouvent principalement dans le domaine agricole, horticole et des travaux publics, pour servir de tuteur ou d'élément de signalisation, tel que pancarte.

Un jalon se compose d'un piquet planté dans le sol et d'une plaque visible à distance. De plus, selon les usages, le piquet de jalonnage doit présenter une hauteur plus ou moins importante. Une faible hauteur est difficilement visible à distance, de plus un jalon court peut être masqué par un feuillage. Par contre, une grande hauteur de piquet offre une prise au vent importante, en outre il peut plus facilement être renversé par les engins motorisés.

La présente invention concerne un piquet modulaire de jalonnage c'est-à-dire un piquet dont la longueur peut être ajustée selon les besoins par emboitement bout à bout d'éléments modulaires.

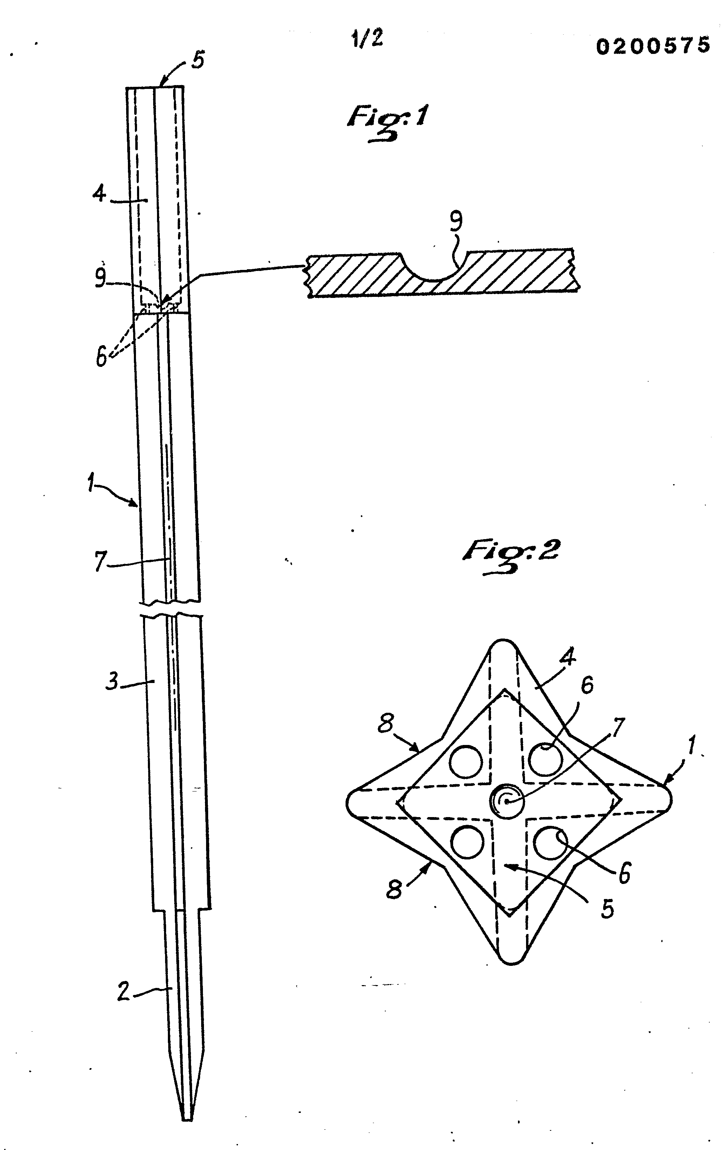

La figure 1 illustre un piquet modulaire de jalonnage réalisé selon un mode préférentiel de conception de l'invention. Le piquet modulaire de jalonnage (1) comprend une embase effilée (2) destinée à faciliter la pénétration dans le sol. En effet, la pose du piquet est réalisée en plantant ce dernier dans un sol meuble. Le piquet (1) comprend un corps central (3) qui présente suffisamment de raideur pour supporter la superposition de plusieurs éléments modulaires et également suffisamment de souplesse pour permettre une flexion sans rupture sous l'effet du vent.

Le piquet (1) est terminé par une extrémité supérieure (4) munie d'une cavité axiale (5) susceptible de recevoir la pointe (2) d'un piquet modulaire (1) superposé. De la sorte, il est possible de juxtaposer bout à bout différents éléments modulaires pour accroître la hauteur du jalon.

La cavité (5) peut également recevoir la pointe d'une plaque qui délimite en hauteur le jalon dont la description figure par la suite.

Jusqu'à présent, les difficultés étaient rencontrées avec l'introduction de corps étrangers dans la cavité (5) qui finissaient par obturer celle-ci en interdisant ou tout au moins en rendant très difficile l'introduction d'une pointe (2) de piquet modulaire (1).

Selon la caractéristique principale de la présente invention, la cavité (5) de l'extrémité supérieure (4) du piquet modulaire (1) est dotée d'orifices (6) de communication avec l'extérieur.

Grâce à la présence de ces orifices, les corps étrangers peuvent dorénavant plus facilement s'échapper de la cavité (5) et les problèmes rencontrés jusqu'à présent sont résolus.

Pour permettre une évacuation de l'intégralité des corps étrangers susceptibles de se retrouver dans la cavité (5), de préférence les orifices (6) sont disposés dans la partie inférieure de la cavité (5) tels que représentés à la figure 1.

Cette disposition est particulièrement importante à l'égard des eaux de ruissellement qui, de la sorte, ne peuvent s'accumuler dans le fond de la cavité (5) comme cela existait auparavant, ce qui avait pour conséquence, en période de gel, de faire éclater la cavité (5).

Selon le mode préférentiel de réalisation de l'invention, les orifices (6) sont disposés coaxialement par rapport à l'axe (7) du piquet (1).

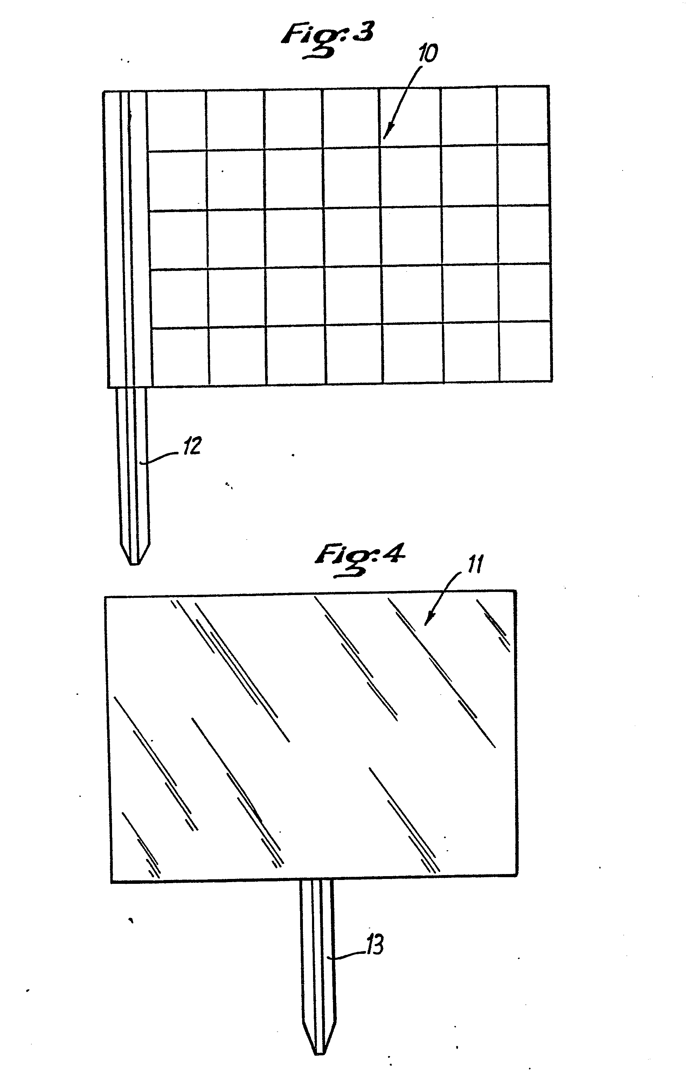

La figure 2 illustre le piquet modulaire de jalonnage de la présente invention selon une vue axiale dans laquelle les orifices (6) sont répartis coaxialement à l'axe (7) du piquet (1).

De préférence, le corps (3) ainsi que l'extrémité effilée (2) présentent une section cruciforme. Cette section est particulièrement bien adaptée pour permettre l'immobilisation en rotation du piquet (1) planté dans le sol. En effet, cette section offre un maximum de résistance à la rotation sans pour autant engendrer des difficultés lors de la pénétration axiale du piquet (1) dans le sol. De plus, il s'agit d'une section qui présente une excellente aptitude à la flexion.

La cavité (5) présente des moyens de positionnement en rotation de l'élément mis en place dans ladite cavité (5). Cette caractéristique est essentielle pour transmettre aux différents éléments emboîtés bout à bout l'immobilisation en rotation de l'ensemble. Il est en effet indispensable que les différents éléments de piquets composant le jalon soient solidaires en rotation les uns des autres.

A cet égard, les moyens de positionnement se présentent sous la forme d'un profil sectionnel de la cavité (5) complémentaire à celui de l'embase (2) effilée. Cette complémentarité associée à la forme cruciforme, donc non de révolution, permet d'immobiliser en rotation les différents piquets modulaires emboîtés les uns dans les autres.

Le profil sectionnel retenu pour la cavité est de forme carrée, telle qu'illustrée à la figure 2.

De préférence, les faces extérieures (8) de la partie supérieure (4) du piquet présentent une légère concavité. Cette concavité est favorable à la continuité du jalon et évite que celui-ci présente des saillies susceptibles de s'accrocher aux organes d'un tracteur, par exemple.

De même, la partie supérieure (4) du piquet (1) présente une pente progressive dans la partie servant de liaison avec la partie cruciforme, qui n'apparaît pas sur la figure 1 mais qui cependant donne au piquet une amélioration de sa continuité.

Le fond de la cavité est muni d'un logement (9), visible à la figure 1 sous forme agrandie, ce logement (9) adapté est prévu pour recevoir la pointe du piquet supérieur superposé. Ce logement arrondi évite que la pointe du piquet supérieur ne s'émousse.

Les figures 3 et 4 schématisent deux réalisations de plaques (10) et (11) toutes deux munies d'une pointe respectivement (12) et (13). Dans le cas de la figure (3), la pointe (12) est disposée au niveau de l'extrémité de la plaque (10) alors que dans le cas de la figure 4, la pointe (13) est disposée au centre de la plaque (11). Selon les utilisations, l'une ou l'autre des plaques présentera de meilleures caractéristiques, eu égard à l'usage envisagé.

Les pointes (12) et (13) présentent un profil cruciforme analogue à celui qui est adopté pour la confection de l'embase effilée (2) du piquet (1) de sorte à permettre un emboîtement dans la cavité (5) sans adaptation particulière. Ces pointes sont par contre munies de bagues circulaires d'un diamètre légèrement supérieur à celui de la cavité (5) permettant une excellente solidarité de la partie pancarte avec le reste de l'ensemble. Une rotation de la pancarte est toutefois rendue possible par une action forte issue de la volonté de l'utilisateur pour la placer par là dans une direction précise.

Comme cela apparaît à la figure 2, lors de l'emboîtement d'un élément supérieur dans la cavité (5), que ce soit un piquet modulaire (1) ou une plaque (10) ou (11), les branches de la section cruciforme de l'élément rapporté laissent les orifices (6) dégagés. De la sorte, même en cas d'infiltration d'eau dans l'orifice (5) lors de pluie, ces eaux de ruissellement peuvent librement s'écouler par les orifices

10  0200575

(6) qui ne sont pas masqués par la présence de la pointe de l'élément supérieur.

D'autres mises en oeuvre de la présente invention, à la portée de l'Homme de l'Art, auraient pu être envisagées sans pour autant sortir du cadre de celle-ci.

REVENDICATIONS

1. Elément modulaire de jalonnage destiné à baliser une surface dans le domaine agricole ou des travaux publics, notamment pour délimiter une zone ou matérialiser une voie d'accès, qui comprend une embase (2) effilée destinée à faciliter la pénétration dans le sol, un corps central (3), une extrémité supérieure (4) munie d'une cavité (5) axiale susceptible de recevoir la pointe (2) d'un piquet modulaire (1) superposé ou la pointe d'une plaque (10), (11), c a r a c t é _ r i s é par le fait que la cavité (5) de l'extrémité (4) supérieure du piquet (1) modulaire est dotée d'orifices (6) de communication avec l'extérieur.

2. Piquet modulaire de jalonnage, selon la revendication 1, c a r a c t é r i s é par le fait que les orifices (6) sont disposés dans la partie inférieure de la cavité (5).

3. Piquet modulaire de jalonnage, selon la revendication 2, c a r a c t é r i s é par le fait que les orifices (6) sont disposés coaxialement par rapport à l'axe (7) du piquet (1).

4. Piquet modulaire de jalonnage, selon la revendication 3, dont le corps (3) présente une section cruciforme, c a r a c t é r i s é par le fait que les orifices (6) sont disposés entre les branches de l'élément superposé emboîté dans la cavité (5).

5. Piquet modulaire de jalonnage, selon la revendication 4, c a r a c t é r i s é par le fait que la cavité (5) présente des moyens de positionnement en rotation de l'élément mis en place dans ladite cavité (5).

6. Piquet modulaire de jalonnage, selon la

revendication 5, c a r a c t é r i s é par le fait que les moyens se présentent sous la forme d'un profil sectionnel de la cavité (5) complémentaire à celui de l'embase effilée (2).

7. Piquet modulaire de jalonnage, selon la revendication 6, c a r a c t é r i s é par le fait que le profil sectionnel de la cavité (5) est de forme carrée.

8. Piquet modulaire de jalonnage, selon la revendication 1, c a r a c t é r i s é par le fait que les faces extérieures (8) de la partie supérieure (4) du piquet (1) présentent une légère concavité.

9. Piquet modulaire de jalonnage, selon la revendication 1, .c a r a c t é r i s é par le fait que la partie supérieure (4) du piquet (1) présente une pente progressive dans la partie servant de liaison avec la partie cruciforme.

10. Piquet modulaire de jalonnage, selon la revendication 1, c a r a c t é.r i s é par le fait que le fond de la cavité (5) est muni d'un logement (9) adapté pour recevoir la pointe du piquet (1) superposé.

*Fig.1*

*Fig.2*

*Fig.3*

10

12

*Fig.4*

11

13

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-1 976 264 (MINER et al.) <br> * Page 1, lignes 39-57; figures 1,2 * | 1 | G 01 C 15/06 |
| | --- | | |
| A | FR-A- 347 681 (WEILANDT) <br> * En entier * | 1 | |
| | ----- | | |

| | DOMAINES TECHNIQUES RECHERCHES (Int. Cl.4) |
|---|---|
| | G 01 C <br> E 04 H |

Le présent rapport de recherche a été établi pour toutes les revendications

| Lieu de la recherche <br> LA HAYE | Date d'achèvement de la recherche <br> 09-06-1986 | Examinateur <br> PORWOLL H.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82